# FASCICULE DE BREVET EUROPEEN

(11) **EP 3 314 846 B1**
(45) Date de publication et mention de la délivrance du brevet: **25.11.2020**
(21) Numéro de dépôt: 16734601.4
(22) Date de dépôt: 24.06.2016
(51) Int. Cl.: H04L 29/06, H04L 29/08, H04L 12/40, H04L 9/00, H04L 9/32, H04L 12/12

(54) **PROCÉDÉ DE DÉTECTION D'ATTAQUES DANS UN RÉSEAU DE COMMUNICATION PAR DIFFUSION COMPRENANT DES ÉQUIPEMENTS ÉLECTRONIQUES ET/OU INFORMATIQUES, ET RÉSEAU CORRESPONDANT**
VERFAHREN ZUR DETEKTION VON ATTACKEN IN EINEM RUNDFUNKKOMMUNIKATIONSNETZWERK MIT ELEKTRONISCHEN UND/ODER COMPUTERVORRICHTUNGEN UND ZUGEHÖRIGES NETZWERK
METHOD FOR DETECTING ATTACKS IN A BROADCAST COMMUNICATION NETWORK INCLUDING ELECTRONIC AND/OR COMPUTER DEVICES, AND CORRESPONDING NETWORK

(30) Priorité: 26.06.2015 FR 1555992
(43) Date de publication de la demande: 02.05.2018
(73) Titulaire: Institut de Recherche Technologique Systemx, 91120 Palaiseau (FR); Renault S.A.S., 92100 Boulogne-Billancourt (FR); AUTOMOBILES PEUGEOT, 75116 Paris (FR)
(72) Inventeur: KLAUDEL, Witold, 91120 Palaiseau (FR); CHIRON, Pascal, 92140 Clamart (FR); BOUDGUIGA, Aymen, 92160 Antony (FR); BOULANGER, Antoine, 92340 Bourg-la-reine (FR)
(74) Mandataire: Lavoix
(86) Numéro de dépôt international: PCT/EP2016/064739
(87) Numéro de publication internationale: WO 2016/207394

(56) Documents cités:
- WO-A1-2015/008114
- US-A1- 2013 297 783
- US-A1- 2015 089 236
- US-A1- 2015 172 306

## Description

La présente invention concerne un procédé de détection d'attaques dans un réseau de communication par diffusion comprenant des équipements électroniques et/ou informatiques. L'invention trouve notamment une application aux équipements embarqués dans un véhicule, tel qu'une automobile, et reliés en réseau.

De nos jours, les véhicules sont souvent équipés d'un certain nombre d'appareils ou d'équipements électroniques et/ou informatiques, dont la fonction peut être de contrôler des éléments tels que le moteur, la transmission, les dispositifs de sûreté de fonctionnement, etc...

Ces équipements, généralement associés à des contrôleurs électroniques, sont interconnectés par un support ou bus de communication pour former un réseau de communication. Ces contrôleurs communiquent entre eux en échangeant par diffusion des informations par paquet, sous forme de trames d'information selon un protocole de communication défini.

Parmi les types de réseau utilisés en particulier dans l'industrie automobile, les réseaux de type « CAN » (« Controller Area Network »), avec protocole et bus de communication du même nom, sont certainement les plus répandus. D'autres systèmes de communication par diffusion, tel que « FlexRay », sont également utilisés.

Compte tenu de l'évolution des technologies, les véhicules sont de plus en plus vulnérables aux attaques visant par exemple à faire transiter sur le bus de communication une information en se faisant passer pour l'un des équipements du réseau.

C'est pourquoi la question de la sécurisation des communications par diffusion dans un tel réseau est devenue primordiale.

Les solutions connues visant à sécuriser les communications transitant par trames sur un bus de communication sont basées l'authentification des contrôleurs en utilisant des certificats électroniques et des clés publiques associées, sur l'ajout de données cryptographiques dans chaque trame, et sur l'utilisation de pare-feu, tel que présenté dans la publication « Security in automotive bus systems », M Wolf, A weimerskirch and C Paar, Proceedings of the Workshop on Embedded Security in Cars (escar)'04.

Des exemples sont également donnés dans les publications suivantes, dans lesquelles il est notamment question de minimiser la complexité des calculs et le volume des données cryptographiques :
- « Efficient protocol for secure broadcast in controller area networks », B Groza and S Murvay, IEEE Transcations on industrial informatics, vol 9, No 4, November 2013 ;
- « Libra-can: a lightweight broadcast authentication protocol for controller area networks », B Groza, S Murvay, A Van Herrewege, I Verbauwhede, Cryptology and Network Security, 185-200, January 2012 ;
- « CANAuth-a simple, backward compatible broadcast authentication protocol for CAN bus », A Van Herrewege, D Singelee, I Verbauwhede , ECRYPT Workshop on Lightweight Cryptography 2011, 2011.

Ces exemples s'appuient sur la publication « Efficient Authentication and Signing of Multicast Streams over Lossy Channels », A. Perrig, R. Canetti, J. D. Tygar, and D. X. Song, IEEE Symposium on Security and Privacy, 2000, pp. 56-73, dans laquelle est élaborée la base théorique de l'authentification des messages dans un environnement de communication par diffusion (« broadcast » en anglais).

Les solutions connues de sécurisation des communications sur un bus de communication par diffusion en environnement embarqué dans un véhicule, quels que soient le système et le protocole de communication concernés, sont donc basées sur des approches classiques de sécurisation des communications qui sont souvent coûteuses et complexes.

L'invention est définie dans les revendications indépendantes.

J Un des buts de l'invention est de proposer un procédé de communication sécurisée simple et fiable, qui puisse être aisément mis en œuvre dans les systèmes de communication connus.

Ainsi, l'invention a pour objet, selon un premier aspect, un procédé de détection d'attaques dans un réseau de communication par diffusion comprenant des équipements électroniques et/ou informatiques, ledit réseau comprenant des nœuds émetteurs et récepteurs associés auxdits équipements, un bus de communication par diffusion apte à transporter des trames d'information identifiées chacune par un identifiant unique et regroupées en domaines, le bus de communication reliant d'une part, au moins un nœud émetteur responsable de l'émission et apte à émettre, des trames d'un ou plusieurs domaines et, d'autre part, au moins un nœud récepteur apte à recevoir des trames d'un ou plusieurs domaines.

Lors de la réception par un nœud récepteur donné d'une trame donnée d'un domaine donné, ledit nœud récepteur donné vérifie s'il a reçu préalablement une trame d'activation de domaine correspondant au domaine donné, de la part du nœud émetteur responsable du domaine donné, et :
- s'il a reçu préalablement ladite trame d'activation de domaine, accepte ladite trame donnée,
- s'il n'a pas reçu préalablement ladite trame d'activation de domaine, applique à ladite trame donnée un filtrage.

Suivant certains modes de réalisation, le dispositif comprend en outre une ou plusieurs des caractéristiques suivantes, prise(s) isolément ou suivant toutes les combinaisons techniquement possibles :
- le filtrage consiste dans le rejet de ladite trame donnée par le nœud récepteur donné ;
- le filtrage consiste dans le rejet de ladite trame donnée en fonction d'un ou plusieurs critères de rejet déterminés ;
- un nœud émetteur responsable d'un domaine émet la trame d'activation de domaine correspondant audit domaine lors de son initialisation ;
- un nœud émetteur responsable d'un domaine émet la trame d'activation de domaine correspondant audit domaine par intervalles ;
- un nœud émetteur responsable d'un domaine émet la trame d'activation de domaine correspondant audit domaine lorsqu'il reçoit une trame de sollicitation d'activation de domaine correspondant audit domaine donné et émise par un nœud récepteur ;
- une trame d'un domaine donné non émise par le nœud émetteur responsable dudit domaine donné, est appelée une trame illégitime, un nœud émetteur responsable d'un domaine donné scrute le bus de communication de manière continue, en sorte de détecter la présence sur ledit bus de communication d'une trame illégitime dudit domaine donné, et ledit nœud émetteur émet une trame de violation de domaine correspondant audit domaine donné lorsqu'il détecte la présence d'une trame illégitime dudit domaine donné ;
- après avoir émis la trame de violation de domaine, le nœud émetteur responsable du domaine donné bascule dans un mode vigilance dans lequel l'émission de trames est interrompue ;
- lorsqu'un nœud récepteur reçoit une trame de violation de domaine correspondant à un domaine donné, il bascule dans un mode vigilance dans lequel la réception et le traitement de trames sont interrompus ;
- le nœud récepteur bascule dans le mode vigilance s'il a précédemment reçu une trame appartenant audit domaine donné ;
- lorsqu'il détecte la présence d'une trame illégitime du domaine dont il est responsable, le nœud émetteur émet un signal d'erreur ;

L'invention a également pour objet, selon un deuxième aspect, un réseau d'équipements électroniques et/ou informatiques comprenant des nœuds émetteurs et récepteurs associés auxdits équipements, un bus de communication par diffusion apte à transporter des trames d'information identifiées chacune par un identifiant unique et regroupées en domaines, le bus de communication reliant d'une part au moins un nœud émetteur responsable de l'émission, et apte à émettre, des trames d'un ou plusieurs domaines, et d'autre part au moins un nœud récepteur apte à recevoir des trames d'un ou plusieurs domaines.

Lesdits nœuds émetteurs et récepteurs sont aptes à mettre en œuvre le procédé de communication sécurisée tel que présenté ci-dessus.

Dans un mode préféré de réalisation, les équipements électroniques et/ou informatiques et le bus de communication sont destinés à être embarqués dans un moyen de transport, tel qu'une automobile.

Ainsi, le procédé de l'invention permet d'authentifier de manière simple une trame diffusée sur le bus de communication, et de détecter les attaques formées par la mise en circulation de trame par un émetteur non autorisé.

Ce procédé peut être mis en œuvre au niveau d'une partie des nœuds du réseau seulement, graduellement nœud par nœud, pour assurer une compatibilité avec des nœuds non sécurisés.

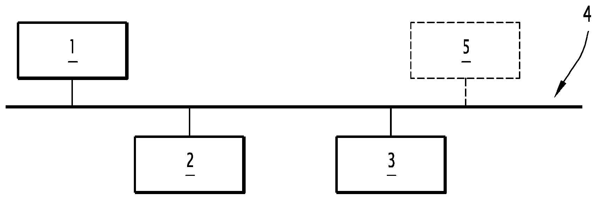

Les caractéristiques et avantages de l'invention apparaitront à la lecture de la description qui va suivre, donnée uniquement à titre d'exemple, et non limitative, en référence à la figure annexée qui représente schématiquement un exemple de réseau de communication selon l'invention.

Tel que représenté dans l'exemple de la figure annexée, dans un réseau de communication, notamment un réseau de communication embarqué dans un véhicule automobile, différents équipements électroniques et/ou informatiques communiquent via une ligne de communication 4 appelée bus de communication par diffusion.

Ces équipements sont connectés sur le bus de communication 4 via des interfaces électroniques 1, 2, 3 correspondant à des nœuds 1, 2, 3 capables de dialoguer sur le bus 4, c'est-à-dire d'émettre et/ou de recevoir des trames d'information et de traiter ces informations.

On parlera indifféremment d'une part de nœuds producteurs d'information ou de nœuds émetteurs d'information, et d'autre part de nœuds consommateurs d'information ou nœuds récepteurs d'information.

Chaque trame F_{ID} circulant sur le bus 4 comprend de manière classique un en-tête, des données, et une fin de trame, et est identifiée par un identifiant ID unique inclus dans l'en-tête.

Chaque nœud est apte à recevoir une trame F_{ID}, mais procède à un filtrage en fonction de l'identifiant unique ID de cette trame F_{ID} en accédant à son en-tête.

Les trames F_{ID} sont regroupées en domaines. Chaque domaine est placé sous la responsabilité d'un nœud. Un nœud responsable d'un domaine est un nœud émetteur autorisé à diffuser les trames faisant partie dudit domaine.

Dans notre exemple, on considère que le domaine A regroupe les trames F_{ID} dont les identifiant ID respectifs sont égaux à 10, 11, 12, 13, 14, soit les trames F₁₀, F₁₁, F₁₂, F₁₃, F₁₄, et que le domaine B regroupe les trames F_{ID} dont les identifiant ID respectifs sont égaux à 15, 16, 17, 18, soit les trames F₁₅, F₁₆, F₁₇, F₁₈.

Toujours dans cet exemple, on considère que le nœud 1 est responsable du domaine A, donc chargé d'émettre et de diffuser les trames F₁₀, F₁₁, F₁₂, F₁₃, F₁₄, et que le nœud 3 est responsable du domaine B, donc chargé d'émettre et de diffuser les trames F₁₅, F₁₆, F₁₇, F₁₈.

Pour chaque domaine A, B, une trame de sécurité supplémentaire est définie, d'identifiant AD, appelée trame d'activation de domaine F_{AD}. Ainsi, dans notre exemple, la trame d'identifiant 1, donc la trame F₁, est la trame d'activation du domaine A, et la trame d'identifiant 4, donc la trame F₄, est la trame d'activation du domaine B.

Ces trames d'activation de domaine F_{AD} contiennent uniquement des données cryptographiques en tant que données utiles, dans le but notamment de garantir l'authenticité de ces trames et d'éliminer les attaques par re-jeu de trame. Dans ce but, on peut utiliser des codes d'authentification de message ou des signatures numériques, combinés avec l'utilisation d'un NONCE (nombre arbitraire à usage unique). Le NONCE peut être un horodatage, un nombre aléatoire, une séquence de nombres, un compteur, ou une combinaison de ceux-ci.

Les identifiants AD de ces trames d'activation de domaine F_{AD}, ainsi que les données cryptographiques utiles, sont partagés, par diffusion sur le bus de communication, avec les nœuds récepteurs ou consommateurs.

Dans le cas de l'utilisation d'un bus de communication 4 et d'un protocole de communication sur ce bus 4, qui utilisent les identifiants uniques ID des trames F_{ID} pour hiérarchiser ces trames F_{ID}, il est préférable d'attribuer à une trame d'activation de domaine F_{AD} un identifiant AD de type dominant (prioritaire) dans la hiérarchie de l'ensemble des trames F_{ID}.

Le rôle et l'utilisation de ces trames d'activation de domaine F_{AD} sont les suivants.

Quand un nœud 1, 2, 3 reçoit une trame F_{ID} d'identifiant ID faisant partie d'un certain domaine A, B, il n'accepte cette trame F_{ID} que si son identifiant ID appartient à la liste d'identifiants d'un domaine pour lequel la présence du nœud responsable du domaine en question a été confirmée ou authentifiée par l'émission de la trame d'activation de domaine F_{AD} correspondante.

Par conséquent, le nœud récepteur 1, 2, 3 vérifie, lors de la réception d'une trame F_{ID} d'identifiant ID, s'il a préalablement reçu la trame d'activation de domaine F_{AD} correspondant au domaine A, B auquel la trame F_{ID} appartient et émise par le nœud responsable du domaine A, B en question.

Si la vérification est positive, le nœud récepteur 1, 2, 3 accepte la trame F_{ID}. Sinon, il applique à cette trame F_{ID} un filtrage. Ce filtrage peut consister dans le rejet des trames F_{ID} appartenant au domaine A, B pour lequel la trame d'activation de domaine F_{AD} n'a pas été reçue. Ainsi, tant que la trame d'activation de domaine F_{AD} du domaine A, B en question n'a pas été reçue par le nœud récepteur 1, 2, 3, ce dernier considère le domaine A, B en question comme non activé ou désactivé, et ignore toute trame F_{ID} appartenant à ce domaine A, B.

Alternativement, le filtrage peut consister dans le rejet des trames F_{ID} appartenant au domaine A, B pour lequel la trame d'activation de domaine F_{AD} n'a pas été reçue, en fonction d'un ou plusieurs critères déterminés. Ainsi, tant que la trame d'activation de domaine F_{AD} du domaine A, B en question n'a pas été reçue par le nœud récepteur 1, 2, 3, ce dernier considère ce domaine A, B comme non activé ou désactivé pour certaines des trames F_{ID} appartenant à ce dernier seulement, et ignore ces trames F_{ID} appartenant à ce domaine A, B en fonction du ou des critères déterminés.

Dans cette alternative, un des critères utilisés par le nœud récepteur 1, 2, 3 pour filtrer les trames F_{ID} appartenant au domaine A, B pour lequel la trame d'activation de domaine F_{AD} n'a pas été reçue, peut être lié à la criticité des trames F_{ID} (criticité de l'information transportée par les trames F_{ID}) et/ou à la criticité de l'équipement électronique ou informatique associé au nœud récepteur 1, 2, 3.

A titre d'exemple, dans un véhicule automobile, certains équipements de sécurité, comme le système de freinage, peuvent être considérés comme des équipements critiques, pour lesquels il ne faut courir aucun risque. Ainsi, dans un tel exemple, lorsqu'une trame F_{ID} appartenant à un domaine A, B déterminé et transportant une information relative au système de freinage est reçue par un nœud récepteur 1, 2, 3 alors que celui-ci n'a pas reçu la trame d'activation de domaine F_{AD} correspondant au domaine A, B déterminé, elle sera rejetée, ou ignorée, par le nœud récepteur 1, 2, 3. A l'inverse, lorsqu'une trame F_{ID} appartenant à un domaine A, B déterminé et transportant une information relative à un système non critique (par exemple : éclairage du tableau de bord) est reçue par un nœud récepteur 1, 2, 3 alors que celui-ci n'a pas reçu la trame d'activation de domaine F_{AD} correspondant au domaine A, B déterminé, elle sera acceptée par le nœud récepteur 1, 2, 3.

Ainsi, lorsque la présence du nœud authentique, producteur responsable du domaine en question, est confirmée grâce à la trame d'activation de domaine F_{AD} correspondante, le nœud producteur responsable du domaine en question peut diffuser les trames applicatives F_{ID} de ce domaine sans sécurisation supplémentaire.

On peut prévoir que chaque nœud responsable de domaine 1, 3 émet et diffuse la trame d'activation de domaine correspondante F_{ID} lors de son initialisation.

On peut prévoir également que les nœuds responsables de domaine 1, 3 réémettent et rediffusent les trames d'activation de domaines respectifs F_{ID} périodiquement, à intervalles réguliers ou non.

Par ailleurs, on peut prévoir, pour chaque domaine A, B, une trame de sécurité supplémentaire, d'identifiant SAD, appelée trame de sollicitation d'activation de domaine F_{SAD}. Ainsi, dans notre exemple, la trame d'identifiant 3, donc la trame F₃, est la trame de sollicitation d'activation du domaine A, et la trame d'identifiant 6, donc la trame F₆, est la trame de sollicitation d'activation du domaine B.

Comme pour les trames d'activation de domaine F_{AD}, ces trames de sollicitation d'activation de domaine F_{SAD} contiennent uniquement des données cryptographiques en tant que données utiles, les identifiants SAD de ces trames de sollicitation d'activation de domaine F_{SAD}, ainsi que les données cryptographiques utiles, étant partagés avec les nœuds récepteurs ou consommateurs.

Le rôle et l'utilisation de ces trames de sollicitation d'activation de domaine F_{SAD} sont les suivants.

Un nœud récepteur, tel que le nœud 2 par exemple, peut émettre la trame de sollicitation d'activation de domaine F₃ correspondant au domaine A sous la responsabilité du nœud 1, ou la trame de sollicitation d'activation de domaine F₆ correspondant au domaine B sous la responsabilité du nœud 3.

En réponse, le nœud 1 responsable du domaine A, ou le nœud 3 responsable du domaine B, émet alors la trame d'activation de domaine F_{AD} correspondante, c'est-à-dire la trame d'activation de domaine F₁ dans le cas du domaine A ou la trame d'activation de domaine F₄ dans le cas du domaine B.

Il s'agit donc dans ce cas d'une diffusion d'une trame d'activation de domaine F_{AD} à la demande, par opposition à une diffusion automatique à l'initialisation ou par période tel qu'expliqué plus haut.

Un nœud récepteur 1, 2, 3 peut également émettre la trame de sollicitation d'activation de domaine F_{SAD} correspondant au domaine A, B lorsqu'il reçoit une trame F_{ID} de ce domaine A, B alors que celui-ci n'est pas activé, c'est-à-dire que la trame d'activation de domaine F_{AD} correspondante n'a pas été reçue par le nœud récepteur 1, 2, 3.

En réponse, le nœud responsable du domaine concerné émet alors la trame d'activation de domaine F_{AD} correspondante.

On peut prévoir aussi, pour chaque domaine A, B, un troisième type de trame de sécurité supplémentaire, d'identifiant VD, appelée trame de violation de domaine F_{VD}. Ainsi, dans notre exemple, la trame d'identifiant 2, donc la trame F₂, est la trame de violation du domaine A, et la trame d'identifiant 5, donc la trame F₅, est la trame de violation du domaine B.

Comme pour les trames d'activation de domaine F_{AD} et les trames de sollicitation d'activation de domaine F_{SAD}, ces trames de violation de domaine F_{VD} contiennent uniquement des données cryptographiques en tant que données utiles, les identifiants VD de ces trames de violation de domaine F_{VD}, ainsi que les données cryptographiques utiles, étant partagés avec les nœuds récepteurs ou consommateurs.

Le rôle et l'utilisation de ces trames de violation de domaine F_{VD} sont les suivants.

Les nœuds producteurs 1, 3 responsables de domaine A, B scrutent de manière continue les trames F_{ID} circulant sur le bus de communication 4, afin de détecter la présence éventuelle sur ce bus 4 de trames F_{ID} dont l'identifiant ID appartient à la liste d'identifiants dont ils sont responsables et qu'ils n'auraient pas eux-mêmes émis, que l'on appelle trames illégitimes F_{ID}.

Si une telle trame illégitime est détectée, alors le nœud responsable émet la trame de violation de domaine F_{VD} correspondante.

Une des conséquences de l'émission par le nœud responsable d'une trame de violation de domaine F_{VD} sera de faire basculer tous les nœuds récepteurs, ou nœuds consommateurs, dans un mode de vigilance dans lequel, par exemple, un nœud récepteur n'accepte aucune trame du nœud émetteur tant que ce dernier n'a pas réémis une trame d'activation de domaine. Eventuellement, ce basculement en mode vigilance ne s'applique qu'aux nœuds récepteurs concernés, c'est-à-dire ceux ayant précédemment reçu une trame F_{VD} d'identifiant ID appartenant à la liste des identifiants du domaine concerné par la trame de violation de domaine F_{VD}.

Une autre des conséquences de l'émission par le nœud responsable d'une trame de violation de domaine F_{VD} sera de faire basculer ce nœud responsable dans le mode vigilance.

Ainsi, dans l'exemple représenté dans la figure annexée, le nœud 1 scrute la présence sur le bus 4 de trames illégitimes F₁₀, F₁₁, F₁₂, F₁₃, F₁₄, qu'il n'a pas lui-même diffusées, par exemple qui ont été diffusées par un intrus 5 dans le réseau. De même, le nœud 3 scrute la présence sur le bus 4 de trames illégitimes F₁₅, F₁₆, F₁₇, F₁₈ éventuellement diffusées par l'intrus 5.

On peut prévoir l'utilisation de compteurs de violation et de temporisateurs de violation, pour éviter les fausses détections en distinguant les défauts permanents des défauts temporaires.

Ainsi, les nœuds 1, 2, 3 implémentent la logique présentée ci-dessus d'utilisation, donc l'émission, la diffusion, la réception et la lecture, des trames de sécurité de type trame d'activation de domaine F_{AD}, trame de sollicitation de domaine F_{SAD} et trame de violation de domaine F_{VD} afin d'être aptes à mettre en œuvre le procédé de sécurisation des communications circulant sur le bus 4 du réseau.

Le réseau peut être partiellement sécurisé, c'est-à-dire comprendre un certain nombre de nœud aptes à mettre en œuvre le procédé de sécurisation des communications, et d'autres nœuds non sécurisés.

Dans ce cas, on peut utiliser un domaine libre pour regrouper les trames F_{ID} pouvant être consommées sans vérification. Ainsi, les nœuds qui ne sont pas aptes à mettre en œuvre le procédé de sécurisation des communications peuvent toujours consommer les trames F_{ID} du domaine libre sans restriction.

Des exemples de séquences de communication dans le réseau de communication correspondant à la figure annexée vont maintenant être présentés, en référence aux tableaux 1, 2 et 3 qui suivent.

On rappelle que, selon l'exemple considéré :
- le domaine A regroupe les trames F₁₀, F₁₁, F₁₂, F₁₃, F₁₄ ;
- le domaine B regroupe les trames F₁₅, F₁₆, F₁₇, F₁₈ ;
- le nœud 1 est responsable du domaine A ;
- le nœud 3 est responsable du domaine B ;
- les trames d'activation de domaine F_{AD}, de violation de domaine F_{VD}, et de sollicitation d'activation de domaine F_{SAD}, pour le domaine A sont respectivement les trames F₁, F₂, F₃ ;
- les trames d'activation de domaine F_{AD}, de violation de domaine F_{VD}, et de sollicitation d'activation de domaine F_{SAD}, pour le domaine B sont respectivement les trames F₄, F₅, F₆.

Le tableau 1 montre plus précisément un exemple de séquence sans violation de domaine, selon le point de vue du nœud 2.

**Tableau 1**

| **Identifiant de trame circulant sur le bus 4** | **Action de la part du nœud 2** |
|---|---|
| *Au démarrage : les domaines A et B sont considérées comme non-actifs, et tous les nœuds du réseau démarrent dans le mode nominal* | |
| **10** | Trame rejetée |
| **1** | Domaine A activé |
| **15** | Trame rejetée |
| **10** | Trame acceptée |
| **4** | Domaine B activé |
| **11** | Trame acceptée |
| **15** | Trame acceptée |
| ..... | ..... |

Ainsi, selon cet exemple de séquence, le nœud 2 reçoit tout d'abord la trame F₁₀ appartenant au domaine A. Comme ce domaine A n'a pas été activé, la trame F₁₀ est rejetée.

Ensuite, le nœud 2 reçoit la trame F₁ d'activation du domaine A, ce qui a pour effet d'activer le domaine A du point de vue du nœud 2.

Le nœud 2 reçoit alors la trame F₁₅, qui fait partie du domaine B qui n'a pas encore été activé. Elle est donc rejetée.

Sur nouvelle diffusion de la trame F₁₀ précédemment rejetée par le nœud 2, celui-ci accepte dans un deuxième temps cette trame F₁₀ puisque le domaine A a été activé entre temps.

Puis, la séquence se poursuit normalement, avec réceptions successives des trames F₁₁ et F₁₅, acceptées par le nœud 2 puisqu'elles appartiennent respectivement aux domaines A et B qui ont été activés.

Un autre exemple de séquence de communication dans le réseau de communication correspondant à la figure annexée va maintenant être présenté, en référence au tableau 2.

Le tableau 2 montre plus précisément un exemple de séquence avec violation de domaine, selon le point de vue des nœuds 1 et 2.

**Tableau 2**

| **Identifiant de trame circulant sur le bus 4** | **Action de la part du nœud 1** | **Action de la part du nœud** 2 |
|---|---|---|
| *Au démarrage : les domaines A et B sont considérés comme non-actifs, et tous les nœuds du réseau démarrent dans le mode nominal* | | |
| **1** | Emission de la trame d'activation de domaine F₁ | Domaine A activé |
| **10** | Emission de la trame applicative F₁₀ | Trame acceptée |
| **11** | Emission de la trame applicative F₁₁ | Trame acceptée |
| **10** (émis par l'intrus 5 sur la figure annexée) | Détection d'une violation du domaine A ; basculement dans le mode vigilance | Trame acceptée (trame de violation de domaine non encore reçue) |
| **2** | Emission de la trame de violation de domaine F₂ | Détection d'une attaque concernant le domaine A ; basculement dans le mode vigilance |
| ..... | ..... | ..... |

Ainsi, selon cet exemple de séquence, le nœud 1 émet tout d'abord trame F₁ d'activation du domaine A, qui est reçue par le nœud 2, ce qui a pour effet d'activer le domaine A du point de vue du nœud 2.

Le nœud 1 émet alors successivement les trames applicatives F₁₀ et F₁₁ du domaine A, reçues successivement par le nœud 2 qui les accepte puisque le domaine A a été précédemment activé.

Ensuite, la trame F₁₀ est émise par l'intrus 5 représenté sur la figure annexée. Il s'agit donc d'une trame illégitime, détectée par le nœud 1 qui considère alors qu'il y a violation du domaine A et qui bascule dans le mode vigilance. De son côté, le nœud 2 accepte à ce stade la trame illégitime F₁₀ car il n'a pas encore reçu l'information sur la violation du domaine A.

A l'étape suivante de la séquence, le nœud 1 émet la trame F₂ de violation du domaine A. Le nœud 2 reçoit alors cette trame F₂ de violation du domaine A et comprend qu'une attaque est détectée concernant le domaine A. Il bascule donc dans le mode vigilance.

Un autre exemple de séquence de communication dans le réseau de communication correspondant à la figure annexée va maintenant être présenté, en référence au tableau 3.

Le tableau 3 montre la même séquence que celle présentée dans le tableau 2, selon le point de vue des nœuds 1 et 2, mais dans le cas d'un bus de communication 4 et d'un protocole de communication permettant l'émission de signaux d'erreur.

**Tableau 3**

| **Identifiant de trame circulant sur le bus 4** | **Action de la part du nœud 1** | **Action de la part du nœud 2** |
|---|---|---|
| *Au démarrage : les domaines A et B sont considérés comme non-actifs, et tous les nœuds du réseau démarrent dans le mode nominal* | | |
| **1** | Emission de la trame d'activation de domaine F₁ | Domaine A activé |
| **10** | Emission de la trame applicative F₁₀ | Trame acceptée |
| **11** | Emission de la trame applicative F₁₁ | Trame acceptée |
| **10** (émis par l'intrus 5 sur la figure annexée) | Détection d'une violation du domaine A ; basculement dans le mode vigilance | Réception de la trame interrompue après réception du signal d'erreur |
| | Emission d'un signal d'erreur pour empêcher la réception de la trame illégitime | |
| **2** | Emission de la trame de violation de domaine F₂ | Détection d'une attaque concernant le domaine A ; basculement dans le mode vigilance |
| ..... | ..... | ..... |

Ainsi, dans cet exemple, les explications sur la séquence sont identiques à celles concernant la séquence du tableau 2, à l'exception de la gestion de l'émission de la trame illégitime F₁₀ par l'intrus 5 représenté sur la figure annexée.

En effet, dans cet exemple, l'émission de cette trame illégitime F₁₀ se traduit, du point de vue du nœud 1, non seulement par la détection d'une violation du domaine A et le basculement de ce nœud 1 dans le mode vigilance, mais également par l'émission d'un signal d'erreur ayant pour but d'empêcher la réception par les nœuds récepteurs du réseau de cette trame illégitime F₁₀.

Aussi, contrairement à ce qui est décrit plus haut en référence au tableau 2, dans ce cas, le nœud 2 n'accepte pas la trame illégitime F₁₀ avant de détecter la violation puis de passer dans le mode vigilance, mais interrompt la réception de cette trame illégitime F₁₀ dès la réception du signal d'erreur. Par exemple, dans les réseaux CAN, la trame d'erreur permet d'écraser la trame qui est en cours d'émission. En effet, la trame d'erreur est prioritaire par rapport à toutes autres trames.

On comprend donc l'intérêt d'implémenter ce mécanisme de sécurité supplémentaire parallèle. En effet, dans le premier cas (tableau 2), la détection de la violation du domaine n'est active du point de vue du nœud 2 qu'après la réception complète de la trame illégitime F₁₀ puisqu'il ne peut pas recevoir la trame de violation de domaine F₂ tant qu'il n'a pas fini la réception de la trame illégitime F₁₀. Dans le deuxième cas (tableau 3), le signal d'erreur émis immédiatement par le nœud 1 dès la détection de la violation et avant l'émission de la trame de violation de domaine F₂, permet au nœud 2 d'être averti de l'attaque au plus tôt, et d'interrompre la réception de la trame illégitime F₁₀.

La présente description est donnée à titre d'exemple et n'est pas limitative de l'invention.

En particulier, l'invention ne se limite pas à un type de réseau, de bus, et de protocole de communication particuliers. Si elle trouve une application particulière aux réseaux, bus et protocoles CAN, notamment dans le domaine automobile, elle s'étend à d'autres types de bus de communication tel que par exemple « FlexRay ».

Par ailleurs, la topologie simple du réseau de communication présenté à la figure annexée n'est qu'un exemple, l'invention ne dépendant pas de la topologie du réseau qui peut être plus ou moins complexe.

## Revendications

1. Procédé de détection d'attaques dans un réseau de communication par diffusion comprenant des équipements électroniques et/ou informatiques, ledit réseau comprenant des nœuds émetteurs et récepteurs (1 à 3) associés auxdits équipements, un bus de communication (4) par diffusion apte à transporter des trames (F_{ID}) d'information identifiées chacune par un identifiant unique (ID) et regroupées en domaines (A, B), le bus de communication (4) reliant d'une part, au moins un nœud émetteur (1, 3) responsable de l'émission et apte à émettre, des trames (F_{ID}) d'un ou plusieurs domaines (A, B) et, d'autre part, au moins un nœud récepteur (1, 2, 3) apte à recevoir des trames (F_{ID}) d'un ou plusieurs domaines,
le procédé étant tel que, lors de la réception par un nœud récepteur (1, 2, 3) donné d'une trame (F_{ID}) donnée d'un domaine (A, B) donné, ledit nœud récepteur (1, 2, 3) donné vérifie s'il a reçu préalablement une trame d'activation de domaine (F_{AD}) correspondant au domaine (A, B) donné, de la part du nœud émetteur (1, 3) responsable du domaine (A, B) donné, et :
- s'il a reçu préalablement ladite trame d'activation de domaine (F_{AD}), accepte ladite trame (F_{ID}) donnée,
- s'il n'a pas reçu préalablement ladite trame d'activation de domaine (F_{AD}), applique à ladite trame (F_{ID}) donnée un filtrage, et
la trame d'activation de domaine contient uniquement des données cryptographiques en tant que données utiles.

2. Procédé selon la revendication 1, **caractérisé en ce que** le filtrage consiste dans le rejet de ladite trame (F_{ID}) donnée par le nœud récepteur (1, 2, 3) donné.

3. Procédé selon la revendication 1, **caractérisé en ce que** le filtrage consiste dans le rejet de ladite trame (F_{ID}) donnée en fonction d'un ou plusieurs critères de rejet déterminés.

4. Procédé selon l'une quelconque des revendications 1 à 3, **caractérisé en ce qu'**un nœud émetteur (1, 3) responsable d'un domaine (A, B) émet la trame d'activation de domaine (F_{AD}) correspondant audit domaine (A, B) lors de son initialisation.

5. Procédé selon la revendication 3, **caractérisé en ce qu'**un nœud émetteur (1, 3) responsable d'un domaine (A, B) émet la trame d'activation de domaine (F_{AD}) correspondant audit domaine (A, B) par intervalles.

6. Procédé selon l'une quelconque des revendications 1 à 5, **caractérisé en ce qu'**un nœud émetteur (1, 3) responsable d'un domaine (A, B) émet la trame d'activation de domaine (F_{AD}) correspondant audit domaine (A, B) lorsqu'il reçoit une trame de sollicitation d'activation de domaine (F_{SAD}) correspondant audit domaine (A, B) donné et émise par un nœud récepteur (1, 2, 3).

7. Procédé selon l'une quelconque des revendications 1 à 6, dans lequel une trame (F_{ID}) d'un domaine (A, B) donné non émise par le nœud émetteur (1, 3) responsable dudit domaine (A, B) donné, est appelée une trame (F_{ID}) illégitime, **caractérisé en ce qu'**un nœud émetteur (1, 3) responsable d'un domaine (A, B) donné scrute le bus de communication (4) de manière continue, en sorte de détecter la présence sur ledit bus de communication (4) d'une trame (F_{ID}) illégitime dudit domaine (A, B) donné, et **en ce que** ledit nœud émetteur (1, 3) émet une trame de violation de domaine (F_{VD}) correspondant audit domaine (A, B) donné lorsqu'il détecte la présence d'une trame (F_{ID}) illégitime dudit domaine (A, B) donné.

8. Procédé selon la revendication 7, **caractérisé en ce qu'**après avoir émis la trame de violation de domaine (F_{VD}), le nœud émetteur (1, 3) responsable du domaine (A, B) donné bascule dans un mode vigilance dans lequel l'émission de trames est interrompue.

9. Procédé selon l'une quelconque des revendications 7 et 8, **caractérisé en ce que** lorsqu'un nœud récepteur (1, 2, 3) reçoit une trame de violation de domaine (F_{VD}) correspondant à un domaine (A, B) donné, il bascule dans un mode vigilance dans lequel la réception et le traitement de trames sont interrompus.

10. Procédé selon la revendication 9, **caractérisé en ce que** le nœud récepteur (1, 2, 3) bascule dans le mode vigilance s'il a précédemment reçu une trame (F_{ID}) appartenant audit domaine (A, B) donné.

11. Procédé selon l'une quelconque des revendications 7 à 10, **caractérisé en ce que** lorsqu'il détecte la présence d'une trame (F_{ID}) illégitime du domaine (A, B) dont il est responsable, le nœud émetteur (1, 3) émet un signal d'erreur.

12. Réseau d'équipements électroniques et/ou informatiques comprenant des nœuds émetteurs et récepteurs (1 à 3) associés auxdits équipements, un bus de communication (4) par diffusion apte à transporter des trames (F_{ID}) d'information identifiées chacune par un identifiant unique (ID) et regroupées en domaines (A, B), le bus de communication (4) reliant d'une part au moins un nœud émetteur (1, 3) responsable de l'émission, et apte à émettre, des trames (F_{ID}) d'un ou plusieurs domaines (A, B), et d'autre part au moins un nœud récepteur (1, 2, 3) apte à recevoir des trames (F_{ID}) d'un ou plusieurs domaines,
le réseau étant tel que lesdits nœuds émetteurs et récepteurs (NPᵢ, NCᵢ) sont aptes à mettre en œuvre le procédé de communication sécurisée selon l'une quelconque des revendications 1 à 11.

13. Réseau selon la revendication 12, **caractérisé en ce que** les équipements électroniques et/ou informatiques et le bus de communication (4) sont destinés à être embarqués dans un moyen de transport, tel qu'une automobile.

## Patentansprüche

1. Verfahren des Erfassens von Angriffen in einem Rundsende-Kommunikationsnetzwerk, welches Elektronik- und/oder Datenverarbeitungseinrichtungen aufweist, wobei das Netzwerk aufweist Sender- und Empfänger-Knoten (1 bis 3), welche mit den Einrichtungen assoziiert sind, einen Rundsende-Kommunikationsbus (4), welcher dazu eingerichtet ist, Datenrahmen (F_{ID}), von welchen jeder mittels einer einzigartigen Kennung (ID) identifiziert ist und welche in Domänen (A, B) gruppiert sind, zu übertragen, wobei der Kommunikationsbus (4) einerseits mindestens einen Sender-Knoten (1, 3), welcher für die Aussendung verantwortlich und zum Aussenden von Rahmen (F_{ID}) von einer oder mehreren Domänen (A, B) eingerichtet ist, und andererseits mindestens einen Empfänger-Knoten (1, 2, 3), welcher zum Empfangen von Rahmen (F_{ID}) von einer oder mehreren Domänen eingerichtet ist, verbindet,
wobei das Verfahren derart ist, dass, beim Empfang, durch einen Empfänger-Knoten (1, 2, 3), eines besagten Rahmens (F_{ID}) einer Domäne (A, B), der besagte Empfänger-Knoten (1, 2, 3) prüft, ob er zuvor einen Domänenaktivierungsrahmen (F_{AD}), welcher mit der besagten Domäne (A, B) korrespondiert, seitens des Sender-Knoten (1, 3), welcher für die besagten Domäne (A, B) verantwortlich ist, empfangen hat, und:
- falls er zuvor den Domänenaktivierungsrahmen (F_{AD}) empfangen hat, den besagten Rahmen (F_{ID}) akzeptiert,
- falls er zuvor den Domänenaktivierungsrahmen (F_{AD}) nicht empfangen hat, einer Filterung auf den besagten Rahmen (F_{ID}) anwendet, und
wobei der Domänenaktivierungsrahmen ausschließlich kryptographische Daten als Nutzdaten enthält.

2. Verfahren gemäß dem Anspruch 1, **gekennzeichnet dadurch, dass** die Filterung in dem Zurückweisen des besagten Rahmens (F_{ID}) durch den Empfänger-Knoten (1, 2, 3) besteht.

3. Verfahren gemäß dem Anspruch 1, **gekennzeichnet dadurch, dass** die Filterung in dem Zurückweisen des besagten Rahmens (F_{ID}) in Abhängigkeit von einer oder mehreren bestimmten Zurückweisungskriterien besteht.

4. Verfahren gemäß irgendeinem der Ansprüche 1 bis 3, **gekennzeichnet dadurch, dass** ein Sender-Knoten (1, 3), welcher für eine Domäne (A, B) verantwortlich ist, den Domänenaktivierungsrahmen (F_{AD}), welcher mit der Domäne (A, B) korrespondiert, bei seiner Initialisierung aussendet.

5. Verfahren gemäß dem Anspruch 3, **gekennzeichnet dadurch, dass** ein Sender-Knoten (1, 3), welcher für eine Domäne (A, B) verantwortlich ist, den Domänenaktivierungsrahmen (F_{AD}), welcher mit der Domäne (A, B) korrespondiert, in Intervallen aussendet.

6. Verfahren gemäß irgendeinem der Ansprüche 1 bis 5, **gekennzeichnet dadurch, dass** ein Sender-Knoten (1, 3), welcher für eine Domäne (A, B) verantwortlich ist, den Domänenaktivierungsrahmen (F_{AD}), welcher mit der Domäne (A, B) korrespondiert, aussendet, wenn er einen Rahmen zur Aufforderung zur Domänenaktivierung (FSAD) empfängt, welcher mit der besagten Domäne (A, B) korrespondiert und von einem Empfänger-Knoten (1, 2, 3) ausgesendet wird.

7. Verfahren gemäß irgendeinem der Ansprüche 1 bis 6, wobei ein Rahmen (F_{ID}) einer besagten Domäne (A, B), welcher nicht durch den Sender-Knoten (1, 3), welcher für die gegebene Domäne (A, B) verantwortlich ist, ausgesendet wurde, ein illegitimer Rahmen (F_{ID}) genannt wird, **gekennzeichnet dadurch, dass** der Sender-Knoten (1, 3), welcher für die besagte Domäne (A, B) verantwortlich ist, den Kommunikationsbus (4) kontinuierliche Weise dazu überprüft, um das Vorhandensein eines illegitimen Rahmens (F_{ID}) der besagten Domäne (A, B) auf dem Kommunikationsbus (4) zu detektieren, und dass der der Sender-Knoten (1, 3) einen Domänenverletzungsrahmen (F_{VD}), welcher mit der besagten Domäne (A, B) korrespondiert, aussendet, wenn das Vorhandensein eines illegitimen Rahmens (F_{ID}) der besagten Domäne (A, B) detektiert wird.

8. Verfahren gemäß dem Anspruch 7, **gekennzeichnet dadurch, dass**, nachdem der Domänenverletzungsrahmen (F_{VD}) ausgesendet wurde, der Sender-Knoten (1, 3), welcher für die besagte Domäne (A, B) verantwortlich ist, in einen Wachsamkeitsmodus übergeht, in welchem die Aussendung von Rahmen unterbrochen ist.

9. Verfahren gemäß dem Anspruch 7 oder 8, **gekennzeichnet dadurch, dass**, wenn ein Empfänger-Knoten (1, 2, 3) einen Domänenverletzungsrahmen (F_{VD}), welcher mit einer besagten Domäne (A, B) korrespondiert, empfängt, dieser in einen Wachsamkeitsmodus übergeht, in welchem der Empfang und die Verarbeitung von Rahmen unterbrochen sind.

10. Verfahren gemäß dem Anspruch 9, **gekennzeichnet dadurch, dass** der Empfänger-Knoten (1, 2, 3) in den Wachsamkeitsmodus übergeht, falls er bereits einen Rahmen (F_{ID}), welcher zu der besagten Domäne (A, B) gehört, empfangen hat.

11. Verfahren gemäß irgendeinem der Ansprüche 7 bis 10, **gekennzeichnet dadurch, dass** der Sender-Knoten (1, 3), wenn das Vorhandensein eines illegitimen Rahmens (F_{ID}) der Domäne (A, B), für die er verantwortlich ist, detektiert wird, ein Fehlersignal ausgibt.

12. Netzwerk aus Elektronik- und/oder Datenverarbeitungseinrichtungen, aufweisend Sender- und Empfänger-Knoten (1 bis 3), welche mit den Einrichtungen assoziiert sind, einen Rundsende-Kommunikationsbus (4), welcher dazu eingerichtet ist, Datenrahmen (F_{ID}), von welchen jeder mittels einer einzigartigen Kennung (ID) identifiziert ist und welche in Domänen (A, B) gruppiert sind, zu übertragen, wobei der Kommunikationsbus (4) einerseits mindestens einen Sender-Knoten (1, 3), welcher für die Aussendung verantwortlich und zum Aussenden von Rahmen (F_{ID}) von einer oder mehreren Domänen (A, B) eingerichtet ist, und andererseits mindestens einen Empfänger-Knoten (1, 2, 3), welcher zum Empfangen von Rahmen (F_{ID}) von einer oder mehreren Domänen eingerichtet ist, verbindet,
wobei das Netzwerk derart ist, dass die Sender- und Empfänger-Knoten (NPᵢ, NCᵢ) dazu eingerichtet sind, das Verfahren zur sicheren Kommunikation gemäß irgendeinem der Ansprüche 1 bis 11 umzusetzen.

13. Netzwerk gemäß dem Anspruch 12, **dadurch gekennzeichnet, dass** die Elektronik- und/oder Datenverarbeitungseinrichtungen und der Kommunikationsbus (4) dazu bestimmt sind, an Bord eines Transportmittels, zum Beispiel eines Automobils, mitgeführt zu werden.

## Claims

1. Method for detecting attacks in a broadcast communication network comprising pieces of electronic and/or computer equipment, said network comprising transmitting and receiving nodes (1 to 3) associated with said pieces of equipment, a broadcast communication bus (4) capable of transporting information frames (F_{ID}) each identified by a unique identifier (ID) and grouped into domains (A, B), the communication bus (4) connecting on the one hand at least one transmitting node (1, 3) responsible for transmission and capable of transmitting frames (F_{ID}) of one or more domains (A, B), and on the other hand at least one receiving node (1, 2, 3) capable of receiving frames (F_{ID}) of one or more domains,
the method being such that, on receipt by a given receiving node (1, 2, 3) of a given frame (F_{ID}) of a given domain (A, B), said given receiving node (1, 2, 3) verifies whether it has previously received a domain activation frame (F_{AD}) corresponding to the given domain (A, B) from the transmitting node (1, 3) responsible for the given domain (A, B) and:
- if it has previously received said domain activation frame (F_{AD}), it accepts said given frame (F_{ID}),
- if it has not previously received said domain activation frame (F_{AD}), it applies a filtering to said given frame (F_{ID}), and
the domain activation frame contains only cryptographic data as data for use.

2. Method according to claim 1, **characterised in that** the filtering consists in rejection of said given frame (F_{ID}) by the given receiving node (1, 2, 3).

3. Method according to claim 1, **characterised in that** the filtering consists in rejection of said given frame (F_{ID}) as a function of one or more predetermined rejection criteria.

4. Method according to any one of claims 1 to 3, **characterised in that** a transmitting node (1, 3) responsible for a domain (A, B) transmits the domain activation frame (F_{AD}) corresponding to said domain (A, B) at the time of its initialisation.

5. Method according to claim 3, **characterised in that** a transmitting node (1, 3) responsible for a domain (A, B) transmits the domain activation frame (F_{AD}) corresponding to said domain (A, B) at intervals.

6. Method according to any one of claims 1 to 5, **characterised in that** a transmitting node (1, 3) responsible for a domain (A, B) transmits the domain activation frame (F_{AD}) corresponding to said domain (A, B) when it receives a domain activation request frame (F_{SAD}) corresponding to said given domain (A, B) and transmitted by a receiving node (1, 2, 3).

7. Method according to any one of claims 1 to 6, wherein a frame (F_{ID}) of a given domain (A, B) that is not transmitted by the transmitting node (1, 3) responsible for said given domain (A, B) is called an illegitimate frame (F_{ID}), **characterised in that** a transmitting node (1, 3) responsible for a given domain (A, B) examines the communication bus (4) continuously so as to detect the presence on said communication bus (4) of an illegitimate frame (F_{ID}) of said given domain (A, B), and **in that** said transmitting node (1, 3) transmits a domain violation frame (F_{VD}) corresponding to said given domain (A, B) when it detects the presence of an illegitimate frame (F_{ID}) of said given domain (A, B).

8. Method according to claim 7, **characterised in that**, after transmitting the domain violation frame (F_{VD}), the transmitting node (1, 3) responsible for the given domain (A, B) switches into a vigilance mode in which the transmission of frames is interrupted.

9. Method according to either claim 7 or claim 8, **characterised in that**, when a receiving node (1, 2, 3) receives a domain violation frame (F_{VD}) corresponding to a given domain (A, B), it switches into a vigilance mode in which the receiving and processing of frames are interrupted.

10. Method according to claim 9, **characterised in that** the receiving node (1, 2, 3) switches into the vigilance mode if it has previously received a frame (F_{ID}) belonging to said given domain (A, B).

11. Method according to any one of claims 7 to 10, **characterised in that**, when it detects the presence of an illegitimate frame (F_{ID}) of the domain (A, B) for which it is responsible, the transmitting node (1, 3) transmits an error signal.

12. Network of pieces of electronic and/or computer equipment comprising transmitting and receiving nodes (1 to 3) associated with said pieces of equipment, a broadcast communication bus (4) capable of transporting information frames (F_{ID}) each identified by a unique identifier (ID) and grouped into domains (A, B), the communication bus (4) connecting on the one hand at least one transmitting node (1, 3) responsible for transmission and capable of transmitting frames (F_{ID}) of one or more domains (A, B), and on the other hand at least one receiving node (1, 2, 3) capable of receiving frames (F_{ID}) of one or more domains,
the network being such that said transmitting and receiving nodes (NPᵢ, NCᵢ) are capable of carrying out the secured communication method according to any one of claims 1 to 11.

13. Network according to claim 12, **characterised in that** the pieces of electronic and/or computer equipment and the communication bus (4) are to be on board a transport means, such as a motor car.
